# EUROPÄISCHE PATENTSCHRIFT

(11) **EP 4 109 085 B1**
(45) Veröffentlichungstag und Bekanntmachung des Hinweises auf die Patenterteilung: **05.03.2025**
(21) Anmeldenummer: 22180008.9
(22) Anmeldetag: 20.06.2022
(51) Int. Cl.: G01N 27/404

(54) **ELEKTROCHEMISCHER GASSENSOR**
ELECTROCHEMICAL GAS SENSOR
CAPTEUR ÉLECTROCHIMIQUE DE GAZ

(30) Priorität: 23.06.2021 DE 102021116238
(43) Veröffentlichungstag der Anmeldung: 28.12.2022
(73) Patentinhaber: Testo SE & Co. KGaA, 79822 Titisee-Neustadt (DE)
(72) Erfinder: Münch, Reinhold, 79111 Freiburg (DE); Steiner, Gregor, 79822 Titisee-Neustad (DE); Bittner, Marc, 79856 Hinterzarten (DE); Kirmair, Alexander, 79822 Tittisee-Neustadt (DE)
(74) Vertreter: Mertzlufft-Paufler, Cornelius

(56) Entgegenhaltungen:
- EP-A1- 2 871 472
- EP-A1- 3 674 701
- EP-A1- 3 719 487
- WO-A1-2005/015195

## Beschreibung

Die Erfindung betrifft einen elektrochemischen Gassensor mit einem Gehäuse, das einen Tank und einen Deckel aufweist, mit einer in dem Gehäuse angeordneten, mit einer gestapelten Anordnung von wenigstens einer ersten Elektrode und einer zweiten Elektrode, die jeweils auf einer Trägermembran angeordnet sind und einem zwischen den Elektroden angeordneten Separator, wobei zwischen der ersten Elektrode und der zweiten Elektrode ein Gasleitungspfad gebildet ist und der Gasleitungspfad innerhalb des durch die Elektroden definierten Bauraumes gebildet ist.

Derartige Gassensoren sind bekannt und dienen beispielsweise zur Messung von CO und H₂.

Bisher ist es üblich, dass die Gasanteile durch die Trägermembrane geleitet werden, auf denen Katalysatoren für eine elektrochemische Reaktion angeordnet sind.

Diese Trägermembrane der ersten und zweiten Elektrode, also einer Messelektrode und einer Hilfselektrode, überdecken sich außenseitig am Umfang und bilden einen Gasleitungspfad am Außenumfang der Elektroden.

Die EP 3 719 487 A1 beschreibt eine Gasdetektionsvorrichtung und ein Verfahren zur Messung der Feuchtigkeit unter Verwendung eines elektrochemischen Gassensors. Die Gasdetektionsvorrichtung umfasst einen elektrochemischen Gassensor auf Elektrolytbasis und einen Controller, der so konfiguriert ist, dass er den durchschnittlichen Feuchtigkeitswert in einer Umgebung über einen bestimmten Zeitraum misst. Der durchschnittliche Umgebungsfeuchtigkeitswert über die Zeitspanne wird auf der Grundlage der durchschnittlichen Änderungsrate der Elektrolytkonzentration im Elektrolytgassensor der Gasdetektionsvorrichtung über die Zeitspanne und der durchschnittlichen Temperatur in der Umgebung über die Zeitspanne bestimmt. Die Gaserfassungsvorrichtung kann so konfiguriert sein, dass sie den durchschnittlichen Umgebungsfeuchtigkeitswert in der Umgebung an einen zweiten elektrochemischen Gassensor oder eine zweite Gaserfassungsvorrichtung in derselben Umgebung übermittelt.

Die WO 2005/015195 A1 beschreibt einen elektrochemischen Gassensor zum Nachweis mindestens einer Gasspezies, die in einer Atmosphäre vorhanden ist. Der Gassensor umfasst: eine erste Gassensorelektrode, die so beschaffen ist, dass sie mindestens eine erste Zielgasspezies nachweisen kann; einen ersten Gaspfad zum Leiten des Gases zu der ersten Gassensorelektrode; eine zweite Gassensorelektrode, die so beschaffen ist, dass sie mindestens eine zweite Zielgasspezies nachweisen kann, wobei die erste und die zweite Gassensorelektrode auf gegenüberliegenden Seiten eines elektrolythaltigen Bereichs angeordnet sind; einen zweiten Gaspfad zwischen der Atmosphäre und der zweiten Elektrode, wobei der Gaspfad die erste Gassensorelektrode umgeht; und eine Gegenelektrode.

Die EP 3 674 701 A1 beschreibt verschiedene Ausführungsbeispiele eines elektrochemischen Gassensor. Der elektrochemische Gassensor kann eine Sensorkappe mit einem oder mehreren festen Merkmalen aufweisen, die auf einer Oberfläche der Sensorkappe angeordnet sind. Der elektrochemische Gassensor kann eine Gegenelektrode enthalten, die so konfiguriert ist, dass sie während der Verwendung des elektrochemischen Gassensors ein Gas erzeugt. Der elektrochemische Gassensor kann eine Entlüftungsbaugruppe enthalten, die dafür ausgelegt ist, mindestens einen Teil des an der Gegenelektrode erzeugten Gases aus dem elektrochemischen Gassensor herauszulassen. Die Entlüftungsbaugruppe kann eine Entlüftungsleitung und eine Entlüftungsmembran umfassen, die einen Durchgang für das Gas definiert, das von einem erweiterten Abschnitt der Gegenelektrode über die Entlüftungsmembran zur Entlüftungsleitung strömt, um aus dem elektrochemischen Gassensor entlüftet zu werden.

Die EP 2 871 472 A1 beschreibt einen Sensor mit einem Sensorgehäuse oder -körper, einem in dem Sensorgehäuse angeordneten, aus Kunststoff geformten Tisch und einer an einem ersten Ende des Tisches angebrachten Gegenelektrode.

Der Erfindung liegt die Aufgabe zugrunde, eine kompaktere Anordnung zu schaffen.

Diese Aufgabe wird erfindungsgemäß durch einen elektrochemischen Sensor mit den Merkmalen des Anspruch 1 gelöst.

Demnach ist der erfindungsgemäße elektrochemische Sensor dadurch gekennzeichnet, dass in dem Separator wenigstens eine Durchleitungsöffnung angeordnet ist, durch die der Gasleitungspfad gebildet ist, dass die erste Elektrode als Ring ausgebildet und die Sensorelektrode ist.

Im Stand der Technik verläuft der Gasleitungspfad üblicherweise am Umfang der Elektroden. Dadurch wird insbesondere bei kleinen Sensoren viel Bauraum benötigt, wodurch eine weitere Miniaturisierung verhindert wird.

Die erfindungsgemäße Anordnung des Gasleitungspfades innerhalb des Bauraumes der Elektroden schafft einen innen liegenden Gasleitungspfad, so dass am Umfang kein zusätzlicher Bauraum benötigt wird. Dadurch ist es möglich wesentlich, kleinere Sensoren herzustellen als mit herkömmlichem Gasleitungspfad. Erfindungsgemäß ist dieser Gasleitungspfad dadurch gebildet, dass in dem Separator wenigstens eine Durchleitungsöffnung angeordnet ist. Auf diese Weise kann ein innenliegender Gasleitungspfad einfach hergestellt werden.

In einer Ausführung ist zusätzlich in der Trägermembran der ersten Elektrode wenigstens eine Durchleitungsöffnung angeordnet. Auf diese Weise kann der Gasleitungspfad genauer definiert werden.

Die Durchleitungsöffnung in dem Separator und/oder in der Trägermembran kann somit auf einfache Weise hergestellt werden, etwa durch Stanzen. Die Diffusionsrate kann durch verschiedene Durchleitungsöffnungen an verschiedene Einsatzzwecke oder für verschiedene Sensoren angepasst werden. Prinzipiell können auch mehrere Durchleitungsöffnungen vorhanden sein, die einen gemeinsamen Gasleitungspfad definieren.

In einer Ausführung ist in eine, beispielsweise die bereits erwähnte, Durchleitungsöffnung in dem Separator und/oder in der Trägermembran der ersten Elektrode ein Einlegeteil eingesetzt. Auf diese Weise kann der Gaskontakt und/oder die Gasleitung zwischen der ersten Elektrode und der zweiten Elektrode sichergestellt werden. Das Einlegeteil besitzt hierzu vorzugsweise dieselbe Form wie die Durchleitungsöffnung und füllt diese flächenmäßig aus.

In einer Ausführung weist der Separator und/oder die Trägermembran wenigstens zwei Durchleitungsöffnungen auf, wobei durch jede Durchleitungsöffnung ein separater Gasleitungspfad innerhalb des durch die Elektroden definierten Bauraumes gebildet ist. Auf diese Weise können beispielsweise zwei oder mehrere getrennte Sensoren innerhalb eines Gehäuses angeordnet sein, wobei jeder Sensor einen eigenen Gasleitungspfad besitzt.

Für die Anordnung der einen oder mehreren Durchleitungsöffnungen gibt es keine weiteren Einschränkungen, als dass sie sich innerhalb einer Elektrode befinden. Dadurch ist eine gute Umsetzung des Gases gewährleistet und eine kompakte Ausgestaltung möglich.

In einer Ausführung ist die wenigstens eine Durchleitungsöffnung mittig und/oder koaxial oder im Wesentlichen mittig und/oder koaxial zu den Elektroden angeordnet. Insbesondere kann eine einzelne Durchleitungsöffnung im geometrischen Mittelpunkt einer Elektrode liegen. Mehrere Durchleitungsöffnungen liegen vorzugsweise symmetrisch zu dem geometrischen Mittelpunkt.

In einer Ausführung ist die gestapelte Anordnung des Sensor rotationssymmetrisch ausgebildet ist. Dazu können die Trägermembrane und die Elektroden vorzugsweise kreis- oder ringförmig oder gemäß einem regelmäßigem Vieleck ausgebildet sein.

In einer Ausführung ist der Separator als Glasfaser-Membran ausgebildet und/oder besteht die Trägermembran aus Polytetrafluorethylen, PTFE, und/oder bestehen die Elektroden aus Platin.

Erfindungsgemäß ist die erste Elektrode die Sensorelektrode und als Ring ausgebildet. Der innere Durchmesser des Rings ist dabei vorzugsweise an die Durchleitungsöffnung des Separators angepasst.

Die Erfindung ist nachfolgend anhand von Ausführungsbeispielen mit Bezug auf die beiliegenden Zeichnungen näher erläutert.

Es zeigt:
- Fig. 1:: einen schematischen Querschnitt eines erfindungsgemäßen Sensors gemäß einer ersten Ausführung,
- Fig. 2:: einen schematischen Querschnitt eines erfindungsgemäßen Sensors gemäß einer zweiten Ausführung,
- Fig. 3:: einen schematischen Querschnitt eines erfindungsgemäßen Sensors gemäß einer dritten Ausführung mit zwei unabhängigen Gaspfaden,
- Fig. 4:: eine Explosionszeichnung eines erfindungsgemäßen Sensors, und
- Fig. 5:: verschiedene Formen für Durchleitungsöffnungen.

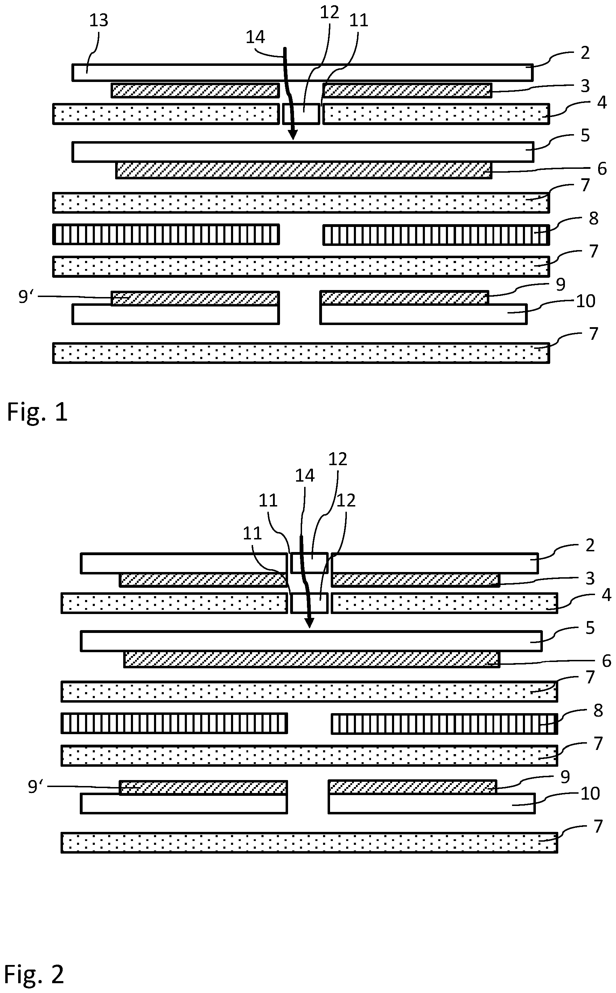

Die Fig. 1 zeigt schematisch einen erfindungsgemäßen elektrochemischen Gassensor 1 mit einer gestapelten Anordnung der Elektroden gemäß einer ersten Ausführung. In der schematischen Darstellung ist zur besseren Übersicht kein Gehäuse dargestellt. Der Gassensor 1 weist im gezeigten Beispiel in dieser

Reihenfolge von oben nach unten die folgenden Schichten auf: eine erste Trägermembran 2, eine erste Elektrode 3 (Sensorelektrode), einen ersten Separator 4, eine zweite Trägermembran 5, eine zweite Elektrode (Hilfselektrode) 6, einen zweiten Separator 7, eine Abschirmmembran 8, einen dritten Separator 7, eine dritte Elektrode (Gegenelektrode), eine vierte Elektrode 9' (Referenzelektrode) 9, eine dritte Trägermembran 10 und einen vierten Separator 7.

Die Trägermembrane 2, 5 und 10 bestehen beispielsweise aus Polytetrafluorethylen, PTFE. Die Separatoren 4 und 7 bestehen beispielsweise aus einem Glasfaserverbundwerkstoff.

Im Beispiel ist der Gassensor rotationssymmetrisch aufgebaut. Die gezeigten Schichten sind daher entweder kreis- oder ringförmig ausgebildet.

Die vier Elektroden 3, 6, 9 und 9' sind jeweils direkt auf der zugehörigen Trägermembran 2, 5 und 10 angeordnet. Wobei die dritte Elektrode 9 und die vierte Elektrode 9' auf derselben Trägermembran 10 angeordnet sind und jeweils nur etwa nur einen halben Kreisring umfassen.

Die Elektroden 3, 6 und 9 mit 9' besitzen untereinander den gleichen Durchmesser, der jedoch kleiner ist als der Durchmesser der Trägermembrane 2, 5 und 10. Der Durchmesser der Trägermembrane 2, 5 und 10 ist hingegen kleiner als der Durchmesser der Separatoren 4 und 7 und der Abschirmmembran 8.

Entscheidend für die Erfindung ist jedoch, dass der erste Separator 4 einen größeren Durchmesser als die jeweils benachbarten Trägermembrane 2 und 5 besitzt und dass der erste Separator 4 eine Durchleitungsöffnung 11 besitzt.

Diese Durchleitungsöffnung 11 ist im Beispiel koaxial in der Mitte des ersten Separators 4 angeordnet und ist ebenfalls kreisförmig ausgebildet. Durch die rotationssymmetrische Ausgestaltung der Stapelanordnung ist eine einfache Montage und ein fehlertoleranter Aufbau möglich. Dadurch kann eine genauere Kalibrierung möglich sein.

Durch diese erfindungsgemäße Anordnung des ersten Separators 4 ist ein zentraler, mittiger Gasleitungspfad 14 gebildet. Das bedeutet, dass die Gasdiffusion von der ersten Elektrode 3 zur zweiten Elektrode 6 durch diese Durchleitungsöffnung 11 erfolgt und nicht wie im Stand der Technik am Umfang des Sensors.

Der Gasleitungspfad 14 benötigt daher keinen Bauraum am Umfang des Sensors 1. Dadurch kann der Durchmesser des Sensors insgesamt reduziert werden ohne dass eine Mindestabmessung der Elektroden unterschritten wird.

Alternativ kann die Durchleitungsöffnung 11 auch außerhalb der Mitte liegen. Wichtig ist jedoch. dass sie innerhalb des durch die Elektroden 3, 6 definierten Bauraumes angeordnet ist. Demnach also insbesondere nicht in dem Umfangs-Bereich 13 der Trägermembrane 2, 5, der über die Elektroden 3, 6 hinausrangt.

Die Durchleitungsöffnung 11 kann auch eine andere Form aufweisen, etwa quadratisch oder elliptisch sein. Die Durchleitungsöffnung 11 ermöglicht eine zuverlässig reproduzierbare Einstellung der Gasdiffusion zur zweiten Elektrode. Insbesondere auch bei miniaturisierten Sensoren.

Im Beispiel ist zudem ein Einlegeteil 12 in die Durchleitungsöffnung 11 eingesetzt. Dieses Einlegeteil 12 besteht ebenfalls aus PTFE und stellt den Gaskontakt und/oder die Gasleitung zwischen der ersten Elektrode 3 und der zweiten Elektrode 6 durch den Separator 4 sicher. Das Einlegeteil 12 besitzt grundsätzlich dieselbe Form wie die

Durchleitungsöffnung 11 und füllt diese flächenmäßig aus.

Die dritte Elektrode 9 dient als Referenzelektrode. Die vierte Elektrode 9' dient als Gegenelektrode. Durch die zweiten und dritten Separatoren 7 und die Abschirmmembran 8 ist sichergestellt, dass kein Gas von der zweiten Elektrode 6 zur dritten Elektrode 9 und vierten Elektrode 9' diffundiert. Wichtig ist daher, dass hier gerade kein Gasleitungspfad 14 ausgebildet ist.

Die Fig. 2 zeigt eine alternative Ausführung eines erfindungsgemäßen Gassensors 1. Der Aufbau, insbesondere die Schichtabfolge, ist identisch zur Fig. 1. Gleiche Teile sind daher mit gleichen Bezugszeichen versehen und nicht nochmal erläutert. Einziger Unterschied zur Ausführung der Fig. 1 besteht darin, dass auch die erste Trägermembran 2 eine Durchleitungsöffnung 11 aufweist, die vorzugsweise identisch zur Durchleitungsöffnung 11 des ersten Separators 4 ausgebildet ist.

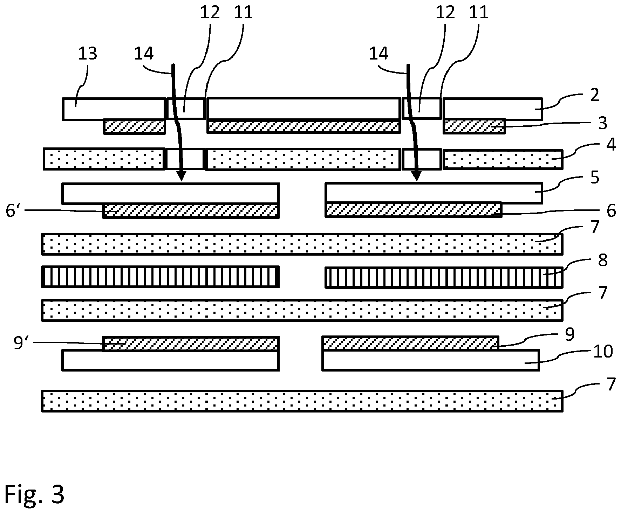

Die Fig. 3 zeigt eine weitere Ausführung eines erfindungsgemäßen Gassensors 1, dessen Schichtabfolge identisch zu den Ausführungen der Figuren 1 und 2 ist. Gleiche Teile sind daher mit gleichen Bezugszeichen versehen und nicht nochmal erläutert. Diese Ausführung weist jedoch zwei unabhängige Gaspfade 14 auf. Hierzu weisen die erste Trägermembran 2, die erste Elektrode 3 (Sensorelektrode) und der ersten Separator 4 jeweils zwei Durchleitungsöffnungen 11 auf. Zudem sind zwei zweite Elektroden (Hilfselektroden) 6 und 6' vorhanden, wodurch effektiv zwei verschiedene Sensoren gebildet sind. Die beiden zweiten Elektroden 6 und 6' können dabei beispielsweise halbkreisförmig oder halbkreisringförmig ausgebildet sein. Auf diese Weise können innerhalb eines Gehäuses mehrere verschiedene Gase detektiert werden.

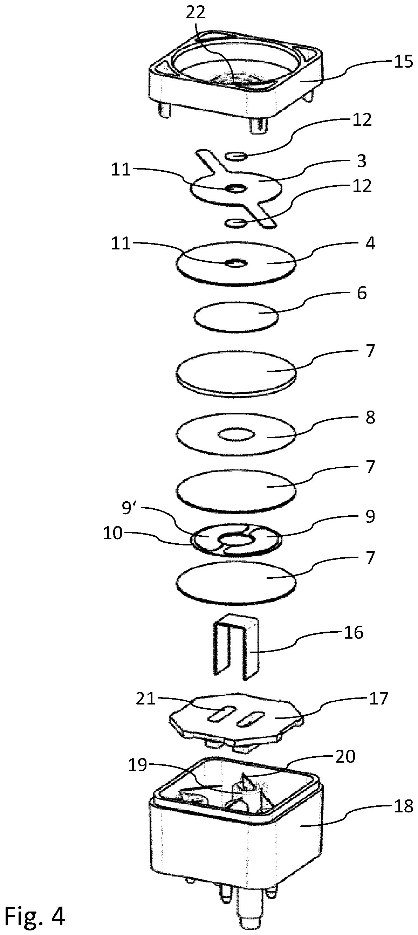

Die Fig. 4 zeigt eine Explosionszeichnung eines erfindungsgemäßen Gassensors 1. Der Gassensor 1 weist im Beispiel einen quadratischen Tank 18 auf. Im Beispiel ist der Sensor ein Kohlenmonoxid-Sensor, wobei in dem Tank 40%ige Schwefelsäure eingefüllt ist. Aus dem Tankboden stehen rohrförmige Vorsprünge 19 hervor, durch die elektrische Kontaktierungen für die vier Elektroden geführt sind. Die elektrischen Kontaktierungen weisen Platindrähte 20 auf, die mit der jeweiligen Elektrode verbunden werden/sind.

Auf den rohrförmigen Vorsprüngen 19 ist ein Tisch 17 aufgelegt, der den Schichtaufbau des Sensors 1 trägt. Der Tisch 17 besitzt etwa mittig zwei rechteckige Öffnungen 21 durch die ein heftklammerförmiger Docht 16 geführt ist. Die beiden Enden des Dochts 16 tauchen in die Schwefelsäure im Tank ein und fördern die Schwefelsäure zu der dritten Elektrode 9 und vierten Elektrode 9'.

Auf dem Tisch 17 ist zunächst ein Separator 7 angeordnet. Auf diesem liegt die Trägermembran 10 mit der dritten Elektrode 9 und der vierten Elektrode 9' auf. Auf die Elektroden 9 und 9' folg ein weiterer Separator 7. Auf diesem Separator 7 liegt eine Abschirmmembran 8 auf.

Oberhalb der Abschirmmembran 8 folgen von unten nach oben in dieser Reihenfolge: ein Separator 7, eine zweite Elektrode (Hilfselektrode) 6, ein Separator 4 und eine erste Elektrode 2. Der Separator 4 und die erste Elektrode 2 besitzen eine mittige Durchleitungsöffnung 11, die durch ein Einlegeplättchen 12 verschlossen ist.

Die Sensoranordnung ist durch einen Deckel 15 verschlossen, wobei in dem Deckel 15 Öffnungen 22 zum Gasdurchlass angeordnet sind.

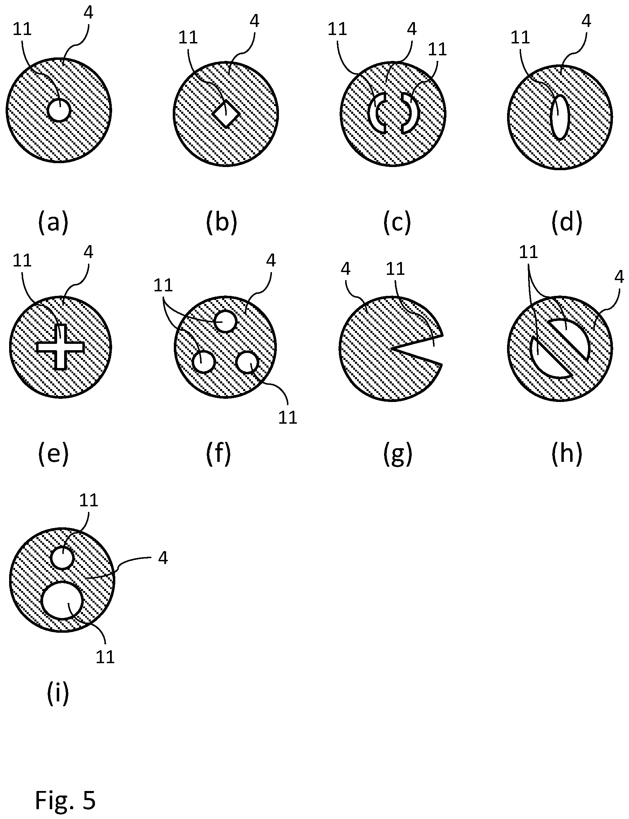

Die Fig. 5 zeigt beispielhaft verschiedene Ausführungsformen für Durchleitungsöffnungen 11 in einem, im Beispiel kreisförmigen, ersten Separator 4. Der erste Separator 4 kann auch eine andere Form besitzen, was jedoch keine Auswirkung auf die Form der Durchleitungsöffnungen hat. Die gezeigten Durchleitungsöffnungen können auch in einer ersten Trägermembran 2 angeordnet sein. Die Fig. 3 (a) zeigt eine kreisförmige Durchleitungsöffnung 11, die koaxial zum Separator 4angeordnet ist. Die Fig. 3 (b) zeigt eine quadratische Durchleitungsöffnung 11, die mittig/koaxial zum Separator 4 angeordnet ist. Die Fig. 3 (c) zeigt zwei etwa klammerförmige Durchleitungsöffnungen 11, die durch einen Steg getrennt sind.

Die Fig. 3 (d) zeigt eine elliptische Durchleitungsöffnung 11, die mittig/koaxial zum Separator 4 angeordnet ist. Die Fig. 3(e) zeigt eine pluszeichenförmige Durchleitungsöffnung 11, die mittig/koaxial zum Separator 4 angeordnet ist. Die Fig. 3 (f) zeigt drei kreisförmige Durchleitungsöffnungen 11, die symmetrisch zur Mitte des Separators 4 angeordnet sind. Die Fig. 3 (g) zeigt einen Pacman-förmigen Separator 4, bei dem eine dreieckige Durchleitungsöffnung 11 am Umfang des Separators 4 angeordnet ist. Die Fig. 3 (h) zeigt einen Separator 4 mit zwei kreissegmentförmigen Durchleitungsöffnungen 11, die durch einen Steg getrennt sind, so dass insgesamt ein Verbotsschild-förmiger Separator 4 gebildet ist. Die Fig. 3 (i) zeigt einen Separator 4 mit zwei kreisförmigen Durchleitungsöffnungen 11, die jedoch unterschiedliche Durchmesser aufweisen.

Bei allen Ausführungen kann die Anordnung, die Größe und/oder die Anzahl der Durchleitungsöffnungen 11 variiert werden, um eine bestimmte und definierte Gasdiffusionsrate zu erzielen.

In einer weiteren Ausführung kann bei den Ausführungen der Fig. 5 (c), (f), (h) und (i) jede Durchleitungsöffnung 11 einen separaten Gasleitungspfad 14 definieren, wie beispielsweise in Fig. 3 gezeigt.

### Bezugszeichenliste

- 1: Sensor
- 2: erste Trägermembran
- 3: erste Elektrode (Sensorelektrode)
- 4: erster Separator
- 5: zweite Trägermembran
- 6,6': zweite Elektrode (Hilfselektrode)
- 7: Separator
- 8: Abschirmmembran
- 9: dritte Elektrode (Gegenelektrode)
- 9': vierte Elektrode (Referenzelektrode)
- 10: dritte Trägermembran
- 11: Durchleitungsöffnung
- 12: Einlegeteil
- 13: Umfangs-Bereich
- 14: Gasleitungspfad
- 15: Deckel
- 16: Docht
- 17: Tisch
- 18: Tank
- 19: rohrförmiger Vorsprung
- 20: Platindraht
- 21: Öffnung in Tisch
- 22: Öffnung in Deckel

## Patentansprüche

1. Elektrochemischer Gassensor (1) mit einem Gehäuse, das einen Tank (18) und einen Deckel (15) aufweist, mit einer in dem Gehäuse angeordneten, gestapelten Anordnung von wenigstens einer ersten Elektrode (3) und einer zweiten Elektrode (6), die jeweils auf einer Trägermembran (2, 5) angeordnet sind, und mit einem zwischen den Elektroden (3, 6) angeordneten Separator (4), wobei zwischen der ersten Elektrode (3) und der zweiten Elektrode (6) ein Gasleitungspfad (14) gebildet ist,
und der Gasleitungspfad (14) innerhalb des durch die Elektroden (3, 6) definierten Bauraumes gebildet ist, **dadurch gekennzeichnet, dass** der Separator (4) einen größeren Durchmesser als die jeweils benachbarten Trägermembrane (2, 5) besitzt, dass in dem Separator (4) wenigstens eine Durchleitungsöffnung (11) angeordnet ist, durch die der Gasleitungspfad (14) gebildet ist und dass die erste Elektrode (3) als Ring ausgebildet und die Sensorelektrode ist.

2. Elektrochemischer Gassensor (1) nach Anspruch 1, **dadurch gekennzeichnet, dass** in der Trägermembran (2) der ersten Elektrode wenigstens eine Durchleitungsöffnung (11) angeordnet ist.

3. Elektrochemischer Gassensor (1) nach Anspruch 1 oder 2,
**dadurch gekennzeichnet, dass** in die oder eine Durchleitungsöffnung (11) in dem Separator (4) und/oder in der Trägermembran (4) der ersten Elektrode (3) ein Einlegeteil (12) eingesetzt ist.

4. Elektrochemischer Gassensor (1) nach einem der Ansprüche 1 bis 3, **dadurch gekennzeichnet, dass** der Separator (4) und/oder ein Einlegeteil (12) wenigstens zwei Durchleitungsöffnungen (11) aufweist und durch jede Durchleitungsöffnung (11) ein separater Gasleitungspfad (13) innerhalb des durch die Elektroden (3, 6) definierten Bauraumes gebildet ist.

5. Elektrochemischer Gassensor (1) nach einem der Ansprüche 1 bis 4, **dadurch gekennzeichnet, dass** die wenigstens eine Durchleitungsöffnung (11) im Wesentlichen mittig und/oder koaxial zu den Elektroden (3, 6) angeordnet ist.

6. Elektrochemischer Gassensor (1) nach einem der vorangehenden Ansprüche, **dadurch gekennzeichnet, dass** die gestapelte Anordnung rotationssymmetrisch ausgebildet ist.

7. Elektrochemischer Gassensor (1) nach einem der vorangehenden Ansprüche, **dadurch gekennzeichnet, dass** der Separator (4) als Glasfaser-Membran ausgebildet ist und/oder dass die Trägermembranen (2, 5) aus Polytetrafluorethylen, PTFE, bestehen und/oder dass die Elektroden (3, 6) aus Platin bestehen.

## Claims

1. Electrochemical gas sensor (1) having a housing comprising a tank (18) and a lid (15), having a stacked arrangement, arranged in the housing, of at least a first electrode (3) and a second electrode (6), which are each arranged on a supporting membrane (2, 5), and having a separator (4) arranged between the electrodes (3, 6), wherein a gas conduction path (14) is formed between the first electrode (3) and the second electrode (6),
and the gas conduction path (14) is formed within the space defined by the electrodes (3, 6),
**characterized in that** the separator (4) has a larger diameter than the respectively adjacent supporting membranes (2, 5), **in that** at least one feed-through opening (11) is arranged in the separator (4), through which the gas conduction path (14) is formed, and **in that** the first electrode (3) is in the form of a ring and is the sensor electrode.

2. Electrochemical gas sensor (1) according to claim 1, **characterized in that** at least one feed-through opening (11) is arranged in the supporting membrane (2) of the first electrode.

3. Electrochemical gas sensor (1) according to claim 1 or 2, **characterized in that** an insert part (12) is inserted into the or a feed-through opening (11) in the separator (4) and/or in the supporting membrane (4) of the first electrode (3).

4. Electrochemical gas sensor (1) according to one of claims 1 to 3, **characterized in that** the separator (4) and/or an insert part (12) has/have at least two feed-through openings (11) and a separate gas conduction path (13) is formed through each feed-through opening (11) within the space defined by the electrodes (3, 6).

5. Electrochemical gas sensor (1) according to one of claims 1 to 4, **characterized in that** the at least one feed-through opening (11) is arranged substantially centrally and/or coaxially with respect to the electrodes (3, 6).

6. Electrochemical gas sensor (1) according to one of the preceding claims, **characterized in that** the stacked arrangement is designed to be rotationally symmetrical.

7. Electrochemical gas sensor (1) according to one of the preceding claims, **characterized in that** the separator (4) is designed as a glass fiber membrane and/or **in that** the supporting membranes (2, 5) consist of polytetrafluoroethylene, PTFE, and/or **in that** the electrodes (3, 6) consist of platinum.

## Revendications

1. Détecteur de gaz électrochimique (1) avec un boîtier contenant une cuve (18) et un couvercle (15), avec une disposition empilée, disposée sur le boîtier, d'au moins une première électrode (3) et une deuxième électrode (6) qui sont disposées chacune sur une membrane de support (2, 5) et avec un séparateur (4) disposé entre les électrodes (3, 6), dans lequel un trajet d'acheminement de gaz (14) est formé entre la première électrode (3) et la deuxième électrode (6) et le trajet d'acheminement de gaz (14) est formé à l'intérieur de l'espace de construction défini par les électrodes (3, 6), **caractérisé en ce que** le séparateur (4) a un plus grand diamètre que la membrane de support (2, 5) voisine, **en ce qu'**au moins une ouverture de passage (11) à travers laquelle le trajet d'acheminement de gaz (14) est formé est disposée dans le séparateur (4) et **en ce que** la première électrode (3) est conformée comme un anneau et est l'électrode de détecteur.

2. Détecteur de gaz électrochimique (1) selon la revendication 1, **caractérisé en ce qu'**au moins une ouverture de passage (11) est disposée dans la membrane de support (2) de la première électrode (11).

3. Détecteur de gaz électrochimique (1) selon la revendication 1 ou 2, **caractérisé en ce qu'**un insert (12) est inséré dans l'ouverture ou une ouverture de passage (11) dans le séparateur (4) et/ou dans la membrane de support (4) de la première électrode (3).

4. Détecteur de gaz électrochimique (1) selon l'une des revendications 1 à 3, **caractérisé en ce que** le séparateur (4) et/ou un insert (12) comportent au moins deux ouvertures de passage (11) et chaque ouverture de passage (11) forme un trajet d'acheminement de gaz (13) séparé à l'intérieur de l'espace de construction défini par les électrodes (3, 6).

5. Détecteur de gaz électrochimique (1) selon l'une des revendications 1 à 4, **caractérisé en ce que** l'au moins une ouverture de passage (11) est sensiblement disposée au milieu et/ou coaxiale des électrodes (3, 6).

6. Détecteur de gaz électrochimique (1) selon l'une des revendications précédentes, **caractérisé en ce que** la disposition empilée est symétrique sur l'axe de rotation.

7. Détecteur de gaz électrochimique (1) selon l'une des revendications précédentes, **caractérisé en ce que** le séparateur (4) est conformé comme une membrane en fibres de verre et/ou **en ce que** les membranes de support (2, 5) se composent de polytétrafluoroéthylène (PTFE) et/ou **en ce que** les électrodes (3, 6) se composent de platine.
